(19) Europäisches Patentamt
European Patent Office
Office européen des brevets

(11) EP 1 810 497 B1

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(21) Anmeldenummer: 05796402.5

(22) Anmeldetag: **03.11.2005**

(51) Int Cl.:
*H04N 1/06* (2006.01)   *H04N 1/053* (2006.01)

(86) Internationale Anmeldenummer:
**PCT/CH2005/000643**

(87) Internationale Veröffentlichungsnummer:
**WO 2006/050623 (18.05.2006 Gazette 2006/20)**

(54) **VERFAHREN UND VORRICHTUNG ZUM AUFZEICHNEN DIGITALER DATEN AUF BILDMATERIAL**

METHOD AND DEVICE FOR RECORDING DIGITAL DATA ON IMAGE MATERIAL

PROCEDE ET DISPOSITIF POUR REPRESENTER DES DONNEES NUMERIQUES SUR UNE MATIERE SUPPORT D'IMAGE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **11.11.2004 CH 18582004**

(43) Veröffentlichungstag der Anmeldung:
**25.07.2007 Patentblatt 2007/30**

(73) Patentinhaber: **Pro Archive AG**
**8142 Uitikon (CH)**

(72) Erfinder: **FLUCK, Daniel**
**CH-8424 Embrach (CH)**

(74) Vertreter: **Sutter, Kurt**
**E. Blum & CO. AG**
**Vorderberg 11**
**8044 Zürich (CH)**

(56) Entgegenhaltungen:
**EP-A- 0 565 335   US-A- 5 315 322**
**US-A- 5 541 637   US-A- 5 576 852**

**Beschreibung**

**Fachgebiet**

Die vorliegende Erfindung betrifft ein Verfahren und eine Vorrichtung zum Aufzeichnen digitaler Daten auf Bildmaterial gemäss den Oberbegriffen der unabhängigen Patentansprüche.

**Stand der Technik**

Vorrichtungen zum Aufzeichnen von digitalen Daten auf ein Bildmaterial sind bekannt, so bspw. aus den Schriften WO-02/13511, US-5,315,322, US-6,175,666, JP-2001213007, JP-2001228619, JP-2001245485 oder JP-61019278.
Die US 5,576,852 zeigt einen Laserdrucker, bei dem gleichzeitig mehrere parallele Zeilen auf einem Speichermedium durch den Einsatz von mehreren Laser-Strahlenbündel geschrieben werden können. Eine spezielle Schaltung trägt Sorge dafür, dass die Laser-Strahlenbündel auf dem Speichermedium gleichen Durchmesser aufweisen.
Die EP 0 565 335 A1 zeigt einen Scanner, bei dem aufgrund eines Not-Aus nachfolgend aufgenommene Daten verworfen werden. Aufgrund der Trägheit des Papierzufuhrsystems bewegt sich das zu scannende Medium aber noch für kurze Zeit weiter. Bei Wiederaufnahme des Betriebs läuft das Papierzufuhrsystem wieder an und nähert sich asymptotisch seiner Zielgeschwindigkeit. Datensätze, die Daten repräsentieren, die zwischen dem letzten gültigen Datensatz vor dem Not-Aus des Systems und dem Datensatz bei erreichter Zielgeschwindigkeit liegen, werden interpoliert anhand der während der Wiederaufnahme des Betriebs gescannten Daten.
Die DE 197 43 943 A1 zeigt eine Druckmaschine mit einem Formzylinder und mit einer Bebilderungseinrichtung mit einem entlang der Mantelfläche des Formzylinders auf einer im Wesentlichen zur Längsachse des Formzylinders parallelen Achse verschieblichen und von einer Antriebseinrichtung angetriebenen Druckkopf. Es ist eine Vorrichtung zur Korrektur von während der Bewegung auftretenden Fehlern bei der Bebilderung des Formzylinders geschaffen. Die Vorrichtung weist Mittel zur Vervielfachung eines Encoder-Signals und einen numerisch gesteuerten Oszillator auf, dem eine Interpolationsvorgabe und eine Phasenkorrektur zugeführt werden. Die Phasenkorrektur berücksichtigt empirische Fehler bei der Bebilderung. Derartige Fehler werden ebenso bei der Erzeugung eines korrigierten Nullimpulses berücksichtigt, der ebenfalls dem Oszillator zugeführt wird. Dieser gewinnt eine von allen empirischen Fehlern korrigierte Frequenz der Bildpunkte.
Eine gattungsgemässe Vorrichtung beinhaltet typischerweise einen Datenspeicher, welcher die gesamten Bilddaten aufnehmen und lückenlos mit der geforderten Datenrate ausgeben kann, und einen Druckkopf, welcher die zugeführten Bilddaten durch gesteuerte Bewegungsvorrichtungen entlang zweier Achsrichtungen in definierter und präziser Abfolge auf das Bildmaterial aufzeichnet. Als Bildmaterial kommt beispielsweise lichtempfindliches Material, Papier, Spezialfolie, Druckplatten usw. in Frage. Um zu gewährleisten, dass das physische Bild auf dem Bildmaterial in der Gesamtheit aller aufgebrachten Pixel in seiner ursprünglichen Qualität erzeugt wird, muss die Bewegung des Druckkopfes entlang der zwei Achsen durch Positionssensoren erfasst und durch geeignete Aufbereitung zur Synchronisierung des Datenabrufs herangezogen werden.
In den bekannten Verfahren und Vorrichtungen zum Aufzeichnen digitaler Daten auf Bildmaterial erfolgt der Bildaufbau durch eine schnelle Bewegung eines Druckkopfes entlang einer Bildzeile, der so genannten Fast-scan-Achse, und durch eine langsame Bewegung des Bildmaterials entlang der so genannten Slow-scan-Achse, welche orthogonal zur Bildzeile steht. Die schnelle Bewegung wird typischerweise durch eine Drehbewegung einer optomechanischen Baugruppe erzeugt. Die langsame Bewegung wird typischerweise durch eine kontinuierliche oder schrittweise Verschiebung des Bildmaterials relativ zum Druckkopf oder umgekehrt realisiert. Sowohl die Größe der Bildpunkte (Pixel) als auch deren Positionierungsgenauigkeit beim Aufbringen der digitalen Daten auf dem Bildmaterial bestimmen entscheidend die Qualität bzw. die Auflösung des erzeugten Gesamtbildes. Um eine Auflösung von beispielsweise 8'000 dpi (Bildpunkte pro Zoll) bzw. 160 Linienpaaren pro Millimeter zu erreichen, muss der Druckkopf Pixel mit einem Durchmesser von 3 $\mu$m erzeugen und mit einer Positionstoleranz von typischerweise 300 nm auf ein zweidimensionales Sollraster aufbringen. Um beispielsweise in einem Laserbelichter beim Ausbelichten von digitalen Daten auf Bildmaterial eine Auflösung von 8'000 dpi zu erreichen, muss der Laserstrahl genau in die photoempfindliche Schicht auf einen 1/e2-Durchmesser von ca. 6 $\mu$m (entsprechend einer vollen Halbwertsbreite von 3 $\mu$m) fokussiert werden. Um Pixel mit gleich bleibendem Durchmesser von 3 $\mu$m zu gewährleisten, muss die Einschnürung des Laserstrahls über den gesamten Bildbereich in der Ebene der photoempfindlichen Schicht gehalten werden; um eine Toleranz im Durchmesser der Pixel von 2 % einzuhalten, muss gemäß Rayleigh die Einschnürung des Gaußschen Laserstrahls auf rund 10 $\mu$m genau in der photoempfindlichen Schicht gehalten werden. Deshalb wird für die hochauflösende Belichtung das Bildmaterial vorzugsweise auf einer Haltefläche, beispielsweise einer Innentrommel, angesaugt.
Ferner ist zu beachten, dass die Bewegung des Laserstrahls (bzw. des Druckkopfes) relativ zum Bildmaterial zu einer Ausschmierung der deponierten Lichtenergie (des aufgebrachten Pixels) führen wird, falls die Belichtungszeit für ein Pixel (die Zeit zum Aufbringen eines Pixels) nicht sehr viel kürzer ist als die Zeitdauer, die der fokussierte Laserstrahl im Belichtungspunkt (bzw. der Druckkopf) benötigt, um sich auf dem Sollraster entlang der Fast-scan-Richtung um genau eine Pixelposition weiter zu bewegen.

Bei einer typischen Geschwindigkeit des Laserstrahls von 100 m/s entlang der Fast-scan-Richtung wird ein Pixelabstand von 3 μm in 30 ns überstrichen. In Laserbelichtungssystemen werden typischerweise akusto-optische Modulatoren eingesetzt, welche bestenfalls Ein- und Ausschaltzeiten von rund 5 ns liefern, womit sich kürzeste Belichtungsintervalle von ca. 15 ns realisieren lassen. Diese Betrachtung legt nahe, dass die Pixel auf dem photoempfindlichen Bildmaterial nur dann rund ausbelichtet werden, wenn der Laserstrahl im Belichtungspunkt eine geeignete Form hat.

Bei einem hochauflösenden Belichtungsverfahren mit beispielsweise 8'000 dpi sind über eine Zeilenlänge von 300 mm rund 100'000 Pixel aufzubringen, wobei insbesondere auch der letzte Pixel in jeder Zeile nicht mehr als 300 nm Positionsabweichung aufweisen darf. Entsprechend muss eine relative Positionsgenauigkeit von $10^{-6}$ (1 ppm, part per million) entlang der Fast-scan-Richtung eingehalten werden. In bekannten Belichtungssystemen mit rotierendem Druckkopf kann die Drehzahl durch eine präzise Steuerung des Antriebs typischerweise mit einer Genauigkeit von $5*10^{-5}$ (50 ppm) konstant gehalten werden. Während die Genauigkeitsanforderung entlang der Slow-scan-Richtung mit den Mitteln gemäß dem Stand der Technik eingehalten werden kann, sind für die Bewegungsausgestaltung entlang der Fast-scan-Richtung neue Verfahren und Vorrichtungen notwendig.

**Darstellung der Erfindung**

Eine Aufgabe der Erfindung besteht nun darin, ein Verfahren zum hochpräzisen Aufbringen digitaler Daten auf Bildmaterial anzugeben, welches die oben beschriebenen Nachteile, Einschränkungen und/oder Mängel gemäß dem Stand der Technik nicht aufweist bzw. zu vermeiden erlaubt. Eine weitere Aufgabe der Erfindung besteht darin, eine Vorrichtung zur Durchführung des Verfahrens zu schaffen.

Diese und andere Aufgaben werden durch das Verfahren und die Vorrichtung gelöst, wie sie in den unabhängigen Patentansprüchen definiert sind. Vorteilhafte Ausführungsformen werden in den abhängigen Ansprüchen angegeben.

Die Erfindung basiert auf der Idee, dass der Druckkopf vor dem Aufbringen der digitalen Daten auf das Bildmaterial durch ein Antriebssystem auf eine Sollgeschwindigkeit oder Solldrehzahl gebracht wird und der Antrieb während des Aufbringens der digitalen Daten auf das Bildmaterial frei- bzw. ausgeschaltet wird. Erst nach dem Aufbringen einer Zeile oder eines Teil- oder Gesamtbildes wird der Druckkopf wieder angetrieben und erneut auf Sollgeschwindigkeit beschleunigt, um die nächste Zeile oder das nächste Teil- oder Gesamtbild aufzubringen. Somit bewegt sich der Druckkopf während der Datenausbelichtung im Freilauf und unterliegt naturgemäß nur noch einer systembedingten Dämpfung, welche die Geschwindigkeit des Druckknopfes entlang der Fast-scan-Richtung kontinuierlich aber determiniert abklingen lässt. Vorzugsweise wird der Druckkopf mit großer Schwungmasse ausgestaltet, so dass die Dämpfung der Fast-scan-Bewegung des freilaufenden Druckkopfes während dem Aufbringen der Bilddaten klein ist, beispielsweise so klein, dass die Geschwindigkeit des Druckkopfes entlang der Fast-scan-Richtung während dem Aufbringen einer Zeile oder eines Teil- oder Gesamtbildes weniger als zehn Prozent abnimmt.

Um zu verhindern, dass die Pixel infolge der abnehmenden Geschwindigkeit des Druckkopfes mit immer kleinerem Abstand auf dem Bildmaterial aufgebracht und die Zeilen immer kürzer werden, können die digitalen Daten auch mit einer im gleichen relativen Masse reduzierten Datenrate abgerufen werden. Ein präzises Aufbringen der Bilddaten auf das Bildmaterial ergibt sich dadurch, dass das passiv gedämpfte Bewegungsverhalten des freilaufenden Druckkopfes entlang der Fast-scan-Richtung mit Hilfe eines Sensorsystems vor und/oder während der Belichtung erfasst und gespeichert wird und daraus durch geeignete Interpolation und/oder Extrapolation hochpräzise Synchronisierungssignale für das Aufbringen der Bilddaten abgeleitet werden. Bei kontinuierlicher Verschiebung entlang der Slow-scan-Richtung kann durch eine proportionale Reduktion der Verschiebegeschwindigkeit des Druckkopfs bzw. des Bildmaterials erreicht werden, dass die Zeilenabstände über die gesamte Bildbreite konstant bleiben trotz sinkender Datenrate bzw. zunehmender Dauer für das Aufbringen einer einzelnen Bildzeile.

Beim erfindungsgemäßen Verfahren zum Aufbringen digitaler Daten auf Bildmaterial mittels eines Druckkopfes werden also das Bildmaterial und der Druckkopf relativ zueinander entlang einer Fast-scan-Richtung angetrieben und bewegt und das Bildmaterial und der Druckkopf relativ zueinander entlang einer Slow-scan-Richtung angetrieben und bewegt. Digitale Bilddaten werden entlang der Fast-scan-Richtung auf das Bildmaterial aufgebracht. Während des Aufbringens der Bilddaten werden das Bildmaterial und der Druckkopf relativ zueinander entlang der Fast-scan-Richtung ohne Antrieb mittels Trägheit relativ zueinander weiterbewegt. Das antrieblose Bewegungsverhalten des Druckkopfes relativ zum Bildmaterial entlang der Fast-scan-Richtung wird vor und/oder während des Aufbringens der Bilddaten erfasst, und daraus werden Synchronisierungssignale für das Aufbringen der Bilddaten abgeleitet.

Dementsprechend beinhaltet die erfindungsgemäße Vorrichtung zur Durchführung des erfindungsgemäßen Verfahrens Haltemittel zum Halten des Bildmaterials, einen Bilddatenspeicher zur Speicherung der aufzubringenden Bilddaten und einen Druckkopf zum Aufbringen von aus dem Bilddatenspeicher zugeführten Bilddaten auf das Bildmaterial, wobei das gehaltene Bildmaterial und der Druckkopf relativ zueinander entlang einer Fast-scan-Richtung und entlang einer Slow-scan-Richtung beweglich sind. Die Vorrichtung beinhaltet ferner Fast-scan-Antriebsmittel zum Antrieb des gehaltenen Bildmaterials und des Druckkopfes relativ zueinander entlang der Fast-scan-Richtung, Slow-scan-Antriebsmittel zum Antrieb des gehaltenen Bildmaterials und des Druckkopfes relativ zueinander entlang der Slow-scan-Richtung, Fast-scan-Sensormittel zur Erfassung der gegenseitigen Lage des gehaltenen Bildmaterials und Druckkopfes entlang der Fast-scan-Richtung und Slow-scan-Sensormittel zur Erfassung der gegenseitigen Lage des gehaltenen Bildmaterials und des Druckkopfes entlang der Slow-scan-Richtung. Die Fast-scan-Antriebsmittel sind vom gehaltenen Bildmaterial und/oder vom Druckkopf abkoppelbar und/oder in ihrer Antriebswirkung abschaltbar. Es ist eine mit den Fast-scan-Sensormitteln, den Slow-scan-Sensormitteln, den Fast-scan-Antriebsmitteln, den Slow-scan-Antriebsmitteln und dem Bilddatenspeicher verbundene Steuereinheit zum Erfassen des Bewegungsverhaltens des Druckkopfes relativ zum Bildmaterial entlang der Fast-scan-Richtung und zum Ableiten von Synchronisierungssignalen für das Aufbringen der Bilddaten vorhanden.

Vorzugsweise wird das Dämpfungsverhalten der Fast-scan-Bewegung des freilaufenden Druckkopfes vor dem Aufbringen der Bilddaten erfasst und gespeichert. Dies ist auf einfache Weise möglich, kann je nach Anforderung an die Bildauflösung einfach oder auch mehrfach vorgenommen werden und bindet nur geringe Rechenkapazität in der Steuereinheit, da die Zuführung der Bilddaten aus dem Bildspeicher zum Aufbringen auf das Bildmaterial noch nicht gestartet hat.

Alternativ kann das Dämpfungsverhalten auch während des Aufbringens der Bilddaten erfasst werden. Dies hat den Vorteil, dass eine kontinuierliche Anpassung erfolgen kann, so dass auch zwischenzeitliche Veränderungen der physikalischen Parameter des Systems noch berücksichtigt werden.

Ein besonderer Vorteil der vorliegenden Erfindung besteht darin, dass nur ein oder einige wenige Start- und/oder Positionssignale benötigt werden, um die Steuerparameter für das hochpräzise Aufbringen der digitalen Daten auf dem Bildmaterial abzuleiten.

Vorzugsweise wird das Verhalten der Fast-scan-Bewegung des freilaufenden Druckkopfes in einer Steuereinheit erfasst, aufbereitet und als kontinuierliche oder fein abgestufte Abfolge von Taktfrequenzen für den Datenabruf gespeichert.

Vorzugsweise werden die Lagedaten des Druckkopfes mit Hilfe von Sensorsystemen erfasst. Solche Systeme sind klein, leicht und einfach anzubringen und können mit hoher Genauigkeit die Lagedaten erfassen.

Die Sensorsysteme befinden sich vorzugsweise am Druckkopf selbst oder sind diesem fest zugeordnet. Hierzu können solche Sensoren beispielsweise an der Drehachse des Druckkopfes oder an der Führungsschiene des Druckkopfes angebracht sein. In einer bevorzugten Ausbildung ist das Sensorsystem fest zum Druckkopf oder zur Haltevorrichtung zur Aufnahme des zu belichtenden Mediums angeordnet. Dadurch kann der vom Sensorsystem ermittelte Lagewert des Druckkopfes direkt umgesetzt werden, ohne zwischengeschaltete Mechanik, die justiert werden müsste und damit fehlerbehaftet wäre.

Das Sensorsystem kann aus mindestens einem Einzelsensor bestehen, der an den Druckkopf angeordnet und mit diesem bewegbar ist. In einer möglichen Ausführungsform besteht das Sensorsystem aus mindestens einem Winkelmesser, welcher fest mit einem rotierenden Druckkopf verbunden ist und über eine Beleuchtungseinrichtung eine optimale Erfassung der Winkellage des Druckkopfes gewährleistet. Alternativ kann das Sensorsystem auch aus mindestens einem Einzelsensor oder mindestens einer Sensorzeile bestehen, welche vorzugsweise fest mit der Haltevorrichtung zur Aufnahme des Bildmaterials verbunden und parallel und/oder senkrecht zur Druckzeile angeordnet ist. Damit das Sensorsystem die Lagedaten mit hinreichender Genauigkeit erfassen kann, ist es vorzugsweise hochauflösend.

In einer weiteren Ausführungsform besteht das Sensorsystem aus mindestens einem periodischen Strichgitter und einem lichtempfindlichen Detektor, welche so angeordnet sind, dass der Laserstrahl beim Überstreichen des Gitters entlang der Fast-scan-Richtung auf dem Detektor ein Signal erzeugt, aus dem eine momentane Lageposition und/oder eine momentane Geschwindigkeit des Druckkopfes abgeleitet werden kann.

In einer weiteren Ausführungsform besteht das Sensorsystem aus mindestens einem Hilfslaser, mindestens einem Hilfsspiegel auf dem beweglichen Druckkopf und mindestens einem lichtempfindlichen Detektor, welche so angeordnet sind, dass der Laserstrahl beim Überstreichen des Hilfsspiegels entlang der Fast-scan-Richtung auf dem Detektor ein Signal erzeugt, aus dem eine momentane Lageposition und/oder eine momentane Geschwindigkeit oder Drehgeschwindigkeit des Druckkopfes abgeleitet werden kann.

Vorzugsweise besteht das Sensorsystem aus mindestens zwei Sensoren, welche die Lagedaten des Druckkopfes entlang der Fast-scan-Richtung und/oder entlang der Slow-scan-Richtung erfassen können.

Das Aufbringen eines einzelnen Pixels auf das Bildmaterial erfolgt vorzugsweise derart schnell, dass die Bewegung des Druckkopfes insbesondere entlang der Fast-scan-Richtung die idealerweise runde Form des auf das Medium aufgebrachten Bildpixels nicht bzw. nur vernachlässigbar verzerrt, so dass die Auflösung des Bildes in beiden Achsrichtungen gewährleistet ist.

Alternativ kann durch erfindungsgemäße Ausgestaltung des Druckkopfes die kreisrunde Form der Pixel auf dem Bildmaterial auch für eine schnelle Bewegung des Druckkopfes relativ zum Bildmaterial gewährleistet werden.

Vorzugsweise wird der Pixel im Druckkopf elliptisch ausgestaltet, d. h. entlang der Fast-scan-Richtung kleiner und entlang der slow-scan-Richtung größer, so dass die Pixel nach dem Aufbringen auf das Bildmaterial effektiv kreisrunde Form haben.

Insbesondere eignet sich das erfindungsgemäße Verfahren zum Ausbelichten von digitalen Daten auf photoempfindliches Bildmaterial in einem Laserbelichter, dessen Druckkopf beispielsweise ein rotierendes Spiegelsystem und optische Mittel zur Fokussierung des Laserstrahls auf das lichtempfindliche Bildmaterial aufweist, wobei die optischen Mittel so ausgestaltet sind, dass der Laserstrahl im Fokus eine elliptische Form aufweist.

Vorzugsweise wird der Laserstrahl durch geeignete Strahlformungs- und/oder Strahlumlenkmittel im Belichtungspunkt elliptisch ausgestaltet, d. h. vorzugsweise entlang der Fast-scan-Richtung kleiner und entlang der Slow-scan-Richtung größer.

Vorzugsweise werden die Laserstrahlen von drei Laser in den drei Grundfarben rot-grün-blau (RGB) in Single-mode-Lichtleiter eingekoppelt und dadurch flexibel einem beweglich gelagerten Druckkopf zugeführt. Eine bevorzugte Ausführungsform mit einem gemeinsamen Lichtleiter für die drei Laserquellen garantiert eine optimale räumliche Überlagerung der Pixel in den drei Grundfarben auf dem Bildmaterial.

Vorzugsweise werden die Strahlformungs- und/oder Strahlumlenkmittel so ausgestaltet, dass durch die Bewegung des Druckkopfes entlang der Fast-scan-Richtung die optische Transmission und/oder Reflexion für den mindestens einen Laserstrahl unabhängig von seinem Polarisationszustand durch diese Mittel nicht beeinflusst wird.

Vorzugsweise wird mindestens ein photoempfindlicher Sensor so angeordnet, dass der mindestens eine Laserstrahl den Sensor während der Bewegung des Druckkopfes unmittelbar vor oder nach der Belichtung des Bildmaterials überstreicht und dabei die optische Leistung des Laserstrahls gemessen werden kann.

Vorzugsweise wird mindestens ein optisches Element zur Änderung der Polarisation des Laserlichtes, beispielsweise eine Wellenplatte oder ein Depolarisator, in den Strahlengang, vorzugsweise zwischen den optischen Modulator und die auf dem beweglichen Druckkopf angebrachten Umlenkmittel, eingesetzt.

Vorzugsweise wird mindestens ein optisches Element auf einer mikromechanischen Verschiebeeinheit, beispielsweise einer Piezostelleinheit, beweglich gelagert und ermöglicht durch geeignete Ausgestaltung, den Fokus des Laserstrahls sehr präzise auf das zu belichtende Bildmaterial einzustellen und nachzuführen. Beispielsweise kann eine Piezostelleinheit das Ende des mindestens einen Lichtleiters beweglich aufnehmen.

Vorzugsweise werden die optischen Mittel zur Fokussierung des mindestens einen Laserstrahls auf dem beweglichen Druckkopf angebracht. Dadurch können kurzbrennweitige Linsensysteme mit kleiner Apertur anstelle langbrennweitiger Teleskope mit großer Apertur zur Fokussierung des Laserstrahls auf das Bildmaterial verwendet werden.

Die Erfindung kann besonders vorteilhaft in Bilderzeugungsgeräten verwendet werden, bei denen mittels eines digitalen Belichtungssystems Bandmaterial belichtet wird. In diesen Geräten kann je nach Anforderung der Auflösung eine hochpräzise Positionierung der digitalen Bilddaten auf einem lichtempfindlichen Medium notwenig sein. Ebenso vorteilhaft kann die Erfindung auch in Filmkopiergeräten verwendet werden. Als Belichtungssysteme werden in derartigen Geräten modulierbare Lichtquellen wie z.B. Laser, Licht emittierende Dioden (LED), oder dergleichen eingesetzt. Ebenso vorteilhaft kann die Erfindung auch in anderen Bilderzeugungsgeräten eingesetzt werden. Hier wären beispielsweise Innentrommeldrucker zu nennen.

Der Ausdruck "Richtung" bezeichnet in diesem Dokument nicht notwendigerweise die Richtung einer Geraden, sondern kann sinngemäß auch eine Drehrichtung bedeuten. Dies gilt insbesondere für die "Fast-scan-Richtung".

## Aufzählung der Zeichnungen

Vorteilhafte Ausführungsformen der Erfindung sowie weitere Vorteile, Merkmale, Ziele und Anwendungsmöglichkeiten derselben werden nachfolgend anhand einer Beschreibung der beigefügten Zeichnungen näher erläutert. In den Zeichnungen bezeichnen dieselben Bezugsgrößen dieselben bzw. entsprechende Elemente. In den Zeichnungen zeigen

Fig. 1 eine erfindungsgemäße Vorrichtung am Beispiel eines Innentrommel-Laserbelichters für Bildmaterial,

Fig. 2 eine erfindungsgemäße Vorrichtung am Beispiel eines Laserbelichters auf Basis eines rotierenden Polygonspiegels,

Fig. 3 eine Ausgestaltungsform des Druckkopfes der erfindungsgemäßen Vorrichtung am Beispiel eines Laserbelichters für Bildmaterial,

Fig. 4 ein Prozessschema zur Durchführung des erfindungsgemäßen Verfahrens zum Aufbringen von digitalen Daten auf Bildmaterial,

Fig. 5 Diagramme des zeitlichen Verlaufs der Geschwindigkeit GX des Druckkopfes entlang der Fast-scan-Richtung für drei Ausführungsformen des erfindungsgemäßen Verfahrens,

Fig. 6 Diagramme des zeitlichen Verlaufs (a) der Geschwindigkeit GX des Druckkopfes entlang der Fast-scan-Richtung, (b) der Taktfrequenz F zum Abrufen und Aufbringen der digitalen Daten auf das Bildmaterial und (c) der Verschiebegeschwindigkeit VY des Druckkopfes oder des Bildmaterials entlang der Slow-scan-Richtung beim erfindungsgemäßen Verfahren,

Fig. 7 eine Ausführungsvariante einer erfindungsgemäßen Vorrichtung am Beispiel eines Laserbelichters,

Fig. 8 eine Ausgestaltungsvariante des Druckkopfes der erfindungsgemäßen Vorrichtung am Beispiel eines Laserbelichters,

Fig. 9 eine weitere Ausgestaltungsvariante des Druckkopfes der erfindungsgemäßen Vorrichtung am Beispiel eines Laserbelichters, und

Fig. 10 eine weitere Ausgestaltungsvariante des Druckkopfes der erfindungsgemäßen Vorrichtung am Beispiel eines Laserbelichters.

## Ausführung der Erfindung

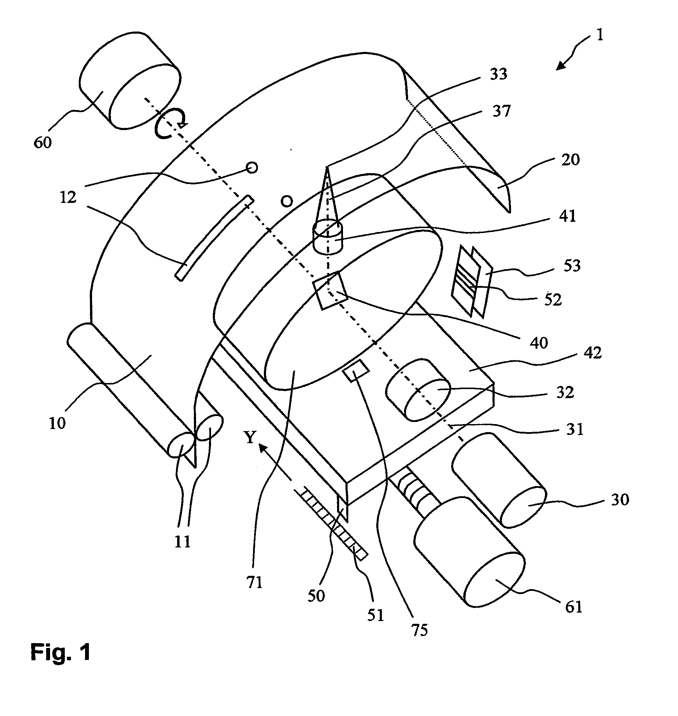

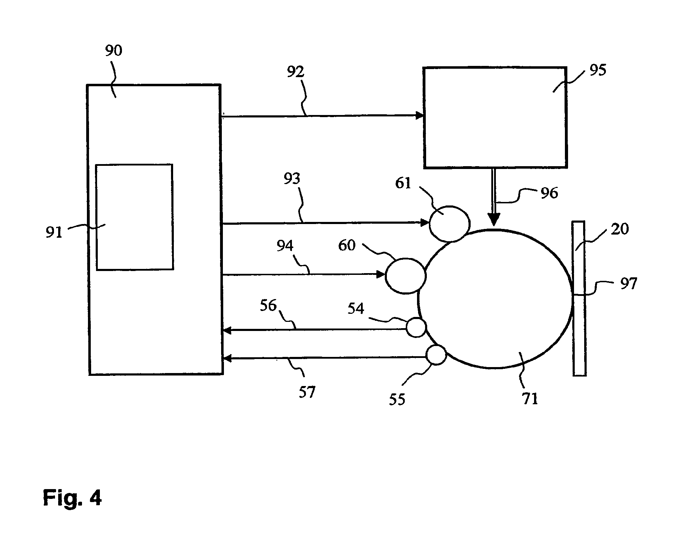

In Figur 1 ist eine erfindungsgemäße Vorrichtung am Beispiel eines Innentrommel-Laserbelichters dargestellt. Bildmaterial 20 wird vorgängig zur Belichtung mit Transporteinrichtungen 11 in eine Innentrommel 10 eingeführt und während des Belichtungsprozesses beispielsweise durch eine Ansaugvorrichtung 12 geeignet an der Innentrommel 10 festgehalten. Ein Laser 30 erzeugt einen Laserstrahl 31, dessen Leistung direkt oder über eine Modulationseinheit 32 variiert werden kann und der über rotierende Umlenkmittel 40 bspw. ein Spiegel, und/oder Strahlformungsmittel 41, bspw. eine Linse oder ein Linsensystem, in einen Fokus 33 auf das Bildmaterial geführt wird und entlang einer Fast-scan-Richtung X auf dem Bildmaterial 20 eine Belichtungszeile erzeugt. Die Umlenkmittel 40 und/oder Strahlformungsmittel 41 sind in einem rotierbaren Druckkopf 71 untergebracht, welcher seinerseits zusammen mit einem Fast-scan-Antriebssystem 60 auf einer Transporteinrichtung 42 angebracht ist. Die Strahlumformungsmittel 41 brauchen nicht auf dem Druckkopf 71 zu liegen, sondern können auch zwischen dem Laser 30 und den Umlenkmitteln 40 angebracht sein. Ein lichtempfindlicher Sensor 75 ist auf der Transporteinrichtung 42 so angebracht, dass der Laserstrahl 37 bei rotierendem Druckkopf 71 im Bereich vor bzw. nach der Belichtung einer Zeile auf Bildmaterial 20 den Sensor 75 kurzzeitig überstreift. Das Fast-scan-Antriebssystem 60 ist reversibel vom Druckkopf 71 abkoppelbar. Das Freischalten bzw. Abkoppeln des Druckkopfes 71 vom Fast-scan-Antriebssystem 60 ist reversibel und kann mechanisch und/oder elektromechanisch und/oder elektrisch erfolgen. Eine frei laufende Bewegung des Druckkopfes 71 kann auch dadurch erreicht werden, dass eine Regel- bzw. Steuerelektronik 90 (vgl. Fig. 4) des Antriebssystems entsprechend beschaltet wird. Die Transporteinrichtung 42 ist durch ein Slow-scan-Antriebssystem 61 entlang der Slow-scan-Richtung Y bewegbar.

Im dargestellten Ausführungsbeispiel besteht ein Sensorsystem 50-53 aus einer Fast-scan-Sensoreinheit 52, 53 zur Erfassung der Bewegung des Druckkopfes 71 bzw. Belichtungspunktes 33 entlang der Fast-scan-Richtung X und aus einer Slow-scan-Sensoreinheit 50, 51 zur Erfassung der Bewegung der Trahsporteinrichtung 42 bzw. des Belichtungspunktes 33 entlang der Slow-scan-Richtung Y. Die Fast-scan-Sensoreinheit besteht vorzugsweise aus einem periodischen Gitterelement 52 und einem Lichtsensor 53 und generiert mit Hilfe des überstreichenden fokussierten Laserstrahls 33 ein Start- und/oder Synchronisierungssignal für die Ausbelichtung der digitalen Daten in eine Bildzeile. Das Slow-scan-Sensorelement besteht vorzugsweise aus einem entlang der Slow-scan-Richtung Y ausgerichteten Maßstab 51 und einem Sensorkopf 50 zur Erfassung der momentanen Position bzw. der momentanen Geschwindigkeit der Transporteinrichtung 42 entlang dieser Richtung Y.

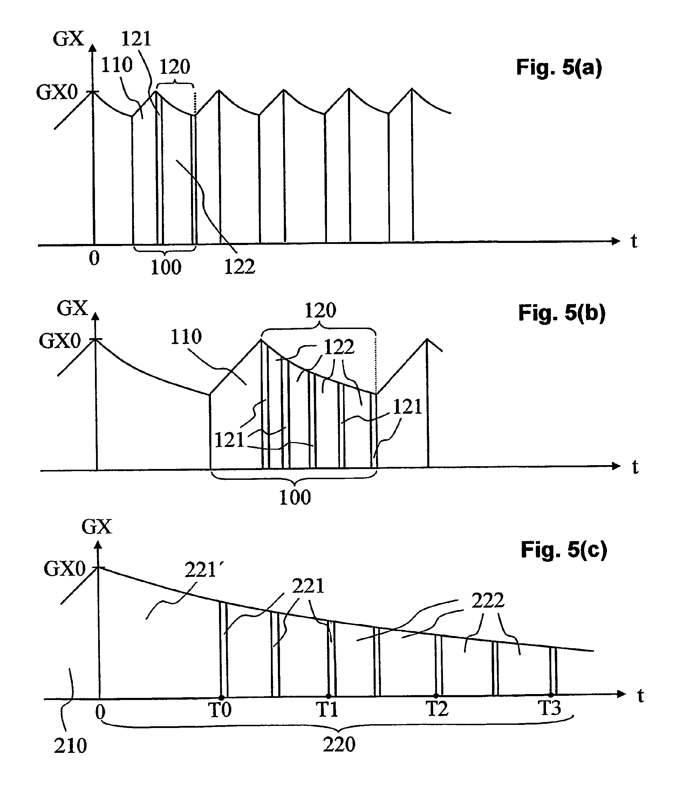

Gemäß der Erfindung ist während des Aufbringens der Bilddaten der Druckkopf 71 vom Fast-scan-Antriebssystem 60 freigeschaltet und bewegt sich ohne Antrieb mittels Trägheit weiter. Um diese antriebslose, nur durch Dämpfung beeinflusste Bewegung möglichst gleichmäßig zu machen, kann es vorteilhaft sein, den Druckkopf 71 mit einem großen Massenträgheitsmoment auszustatten. Andererseits erschwert ein zu träger Druckkopf 71 die Beschleunigung des Druckkopfes 71 auf Solldrehzahl und/oder Sollgeschwindigkeit durch das Fast-scan-Antriebssystem 60, was nachteilig sein kann, wenn nach einer (vgl. Fig. 5 (a)) oder nach einigen wenigen (vgl. Fig. 5 (b)) Bildzeilen das Fast-scan-Antriebssystem 60 zugeschaltet wird. In der Praxis wird man das Massenträgheitsmoment unter Berücksichtigung dieser und anderer Aspekte optimieren, was dem Fachmann bei Kenntnis der Erfindung möglich ist.

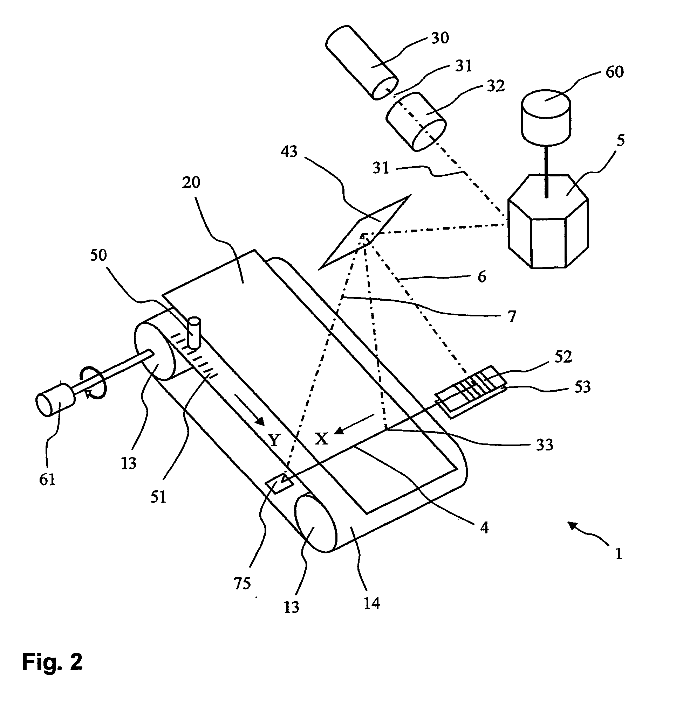

In Figur 2 ist eine erfindungsgemäße Vorrichtung 1 am Beispiel eines Laserbelichters dargestellt. Bildmaterial 20 ist, im Unterschied zu Fig. 1, in einer Ebene, bspw. auf einem zwischen zwei Transportwalzen 13 gespannten Transportband 14 gehalten. Ein Laser 30 erzeugt einen Laserstrahl 31, dessen Leistung direkt oder über eine Modulationseinheit 32 variiert werden kann und der über einen Polygonspiegel 5 und Strahlformungs- und/oder Umlenkmittel 43 in einen Fokus 33 auf das Bildmaterial 20 geführt wird und entlang der Fast-scan-Richtung X eine Bildzeile 4 erzeugt. Das Bildmaterial 20 wird durch eine Transporteinrichtung 13, 14 entlang der Slow-scan-Richtung Y bewegt. Im Ausführungsbeispiel besteht ein Sensorsystem 50-53 aus einer Fast-scan-Sensoreinheit 52, 53 zur Erfassung der Bewegung des Belichtungspunktes 33 entlang der Fast-scan-Richtung X und einer Slow-scan-Sensoreinheit 50, 51 zur Erfassung der Bewegung des Bildmaterials 20 entlang der Slow-scan-Richtung Y. Die Fast-scan-Sensoreinheit 52, 53, welche entlang der Fast-scan-Richtung X aber außerhalb der eigentlichen Bildzeile 4 angebracht ist, besteht vorzugsweise aus einem periodischen Gitterelement 52 und einem Lichtsensor 53 und generiert mit Hilfe des überstreichenden Laserstrahls 6 ein Start- und/oder Synchronisierungssignal für die Ausbelichtung der digitalen Daten in eine Bildzeile 4. Die Slow-scan-Sensoreinheit 50, 51 besteht vorzugsweise aus einer entlang der Slow-scan-Richtung Y ausgerichteten Teilung 51 und einem Sensorkopf 50 zur Erfassung der Position und der Bewegung des Bildmaterials 20 entlang dieser Achse Y. Ein lichtempfindlicher Sensor 75 ist so angebracht, dass der Laserstrahl 7 bei rotierendem Polygonspiegel 5 im Bereich vor bzw. nach der Belichtung einer Bildzeile 4 auf Bildmaterial 20 den Sensor 75 kurzzeitig überstreift.

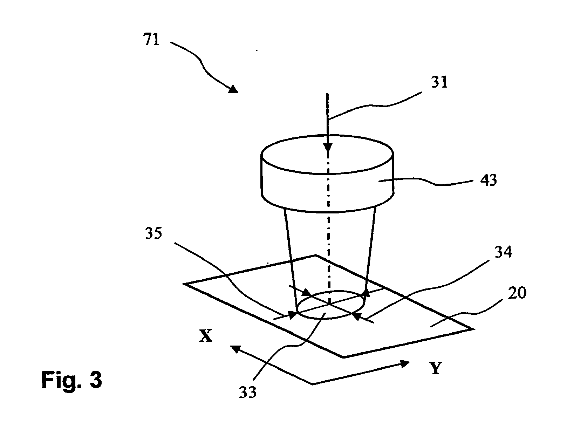

Figur 3 zeigt eine Ausgestaltungsform eines Druckkopfes 71 zur Durchführung des erfindungsgemäßen Verfahrens am Beispiel eines Laserbelichters. Ein einfallender Laserstrahl 31 wird durch Strahlformungs- und/oder Umlenkmittel 43 so in einen elliptischen Fokus 33 auf Bildmaterial 20 geführt, dass eine kurze Strahlachse 34 entlang der Fast-scan-Richtung X und eine lange Strahlachse 35 entlang der Slow-scan-Richtung Y orientiert ist. Dadurch kann eine kreisrunde Form des belichteten Bildpunktes erzielt werden, auch wenn sich der Lichtfleck 33 mit großer Geschwindigkeit in Fast-scan-Richtung X bewegt.

Figur 4 zeigt ein Prozessschema zur Durchführung des erfindungsgemäßen Verfahrens zum Aufbringen von digitalen Daten auf Bildmaterial 20. Ein Druckkopf 71 ist beweglich gelagert und wird mit geeigneten Antriebs- und Führungssystemen 60, 61 entlang einer Fast-scan-Richtung X und einer Slow-scan-Richtung Y über das Bildmaterial 20 bewegt. Ein Sensorsystem 54, 55, beinhaltend mindestens zwei Sensorköpfe 54 und 55, erfasst die Lagedaten des Druckkopfes 71 entlang der Bewegungsrichtungen X bzw. Y und liefert entsprechende Signale 56, 57 an eine Steuereinheit 90. Die Steuereinheit 90 erzeugt aus den aktuellen Sensorsignalen 56, 57 und/oder aus bereits vorgängig in seinem Speicher 91 gespeicherten Sensorsignalreihen geeignete Start- und/oder Synchronisierungssignale 92, 93, 94 und liefert diese an den Bilddatenspeicher 95 für das Abrufen 96 und Aufbringen 97 der digitalen Daten auf Bildmaterial 20 und die Antriebssysteme 60, 61 für die Bewegung des Druckkopfes 71 entlang der beiden Bewegungsrichtungen X und Y.

Figur 5 zeigt drei Ausführungsformen des erfindungsgemäßen Verfahrens, wobei jeweils die Geschwindigkeit GX des Druckkopfes 71 entlang der Fast-scan-Richtung X in Abhängigkeit der Zeit t dargestellt ist.

Gemäß einer ersten, in Figur 5(a) gezeigten Ausführungsform ist das zeitliche Verhalten von GX(t) "periodisch", wobei dieser Begriff hier wegen der unvermeidbaren apparativen Unvollkommenheiten nicht im mathematisch strengen Sinn verwendet wird. Jede Periode 100 ist aus zwei Phasen zusammengesetzt: einer Antriebsphase 110 und einer Freilaufphase 120, wobei letztere vorzugsweise eine Messphase 121 und eine Belichtungsphase 122 beinhaltet.

In einer Antriebsphase 110 wird der Druckkopf 71 durch ein Antriebssystem 60 entlang der Fast-scan-Richtung X auf eine Sollgeschwindigkeit GXO gebracht und nach deren Erreichen freigeschaltet, womit eine Freilaufphase 120 beginnt. Eine Messphase 121, in welcher das Bewegungsverhalten des freilaufenden Druckkopfes 71 entlang der Fast-scan-Richtung X durch das Sensorsystem 52, 53 detektiert und in der Steuereinheit 90 erfasst wird, liegt vorzugsweise innerhalb der Freilaufphase 120, wird aber in der Praxis etwas später beginnen als die Freilaufphase 120 selbst. Eine Belichtungsphase 122, in welcher die digitalen Bilddaten auf das Bildmaterial 20 aufgebracht werden, liegt ebenfalls innerhalb der Freilaufphase 120, wird in der Praxis möglichst direkt nach der Messphase 121 beginnen, um den Zeilenanfang möglichst akkurat zu legen, und etwas früher enden als die Freilaufphase 120 selbst. Im Ausführungsbeispiel von Fig. 5(a) wird während der Belichtungsphase 122 eine einzige Bildzeile 4 belichtet. Danach setzt eine neue Periode mit Antriebsphase und Freilaufphase, in welcher eine einzige Bildzeile 4 belichtet wird, ein, und so weiter, bis das ganze Bild auf das Bildmaterial 20 aufgebracht ist.

Als Verhalten der Geschwindigkeit GX(t) als Funktion der Zeit t während der Freilaufphase 120 ist in erster Näherung eine exponentielle Abnahme der Geschwindigkeit GX(t) zu erwarten:

$$GX(t) = GXO*exp(-\delta*t) \hspace{5cm} (1)$$

für t innerhalb der Freilaufphase, worin $\delta > 0$ eine Abklingkonstante bezeichnet. Es sind aber auch komplexere mathematische Modelle denkbar.

Auch gemäß einer zweiten, in Figur 5 (b) dargestellten Ausführungsform zeigt GX(t) ein "periodisches" Verhalten. Im Unterschied zur ersten Ausführungsform werden hier jedoch in einer Freilaufphase 120 in mehreren Belichtungsphasen 122 mehrere Bildzeilen 4 nacheinander belichtet. Zwischen zwei Belichtungsphasen 122 liegt jeweils eine Messphase 121.

Eine dritte Ausführungsform ist in Figur 5(c) dargestellt. Hier gibt es nur eine einzige Antriebsphase 210. In der anschließenden, einzigen Freilaufphase 220 wird in einer oder mehreren Belichtungsphasen 222 ein ganzer, in sich abgeschlossener Datensatz, bspw. ein vollständiges Bild, zeilenweise auf das Bildmaterial 20 aufgebracht.

In der Ausführungsform von Fig. 5(c) geht der ersten Belichtungsphase 222 eine Messphase 221' voran. In der Messphase 221' wird das Bewegungsverhalten des freilaufenden Druckkopfes 71 entlang der Fast-scan-Richtung X durch das Sensorsystem 52, 53 detektiert und in der Steuereinheit 90 erfasst (siehe Fig. 4). Abhängig von der Auflösung und der Messgenauigkeit des Sensorsystems 52, 53 wird die Dauer der Messphase 221' bzw. die Menge der auszuwertenden Sensorsignale festgelegt.

Eine solche separate Messphase 221' ist jedoch nicht unbedingt nötig. Stattdessen können während der Freilaufphase 220 mit Hilfe des Sensorsystems 52, 53 z. B. Zeiten T0, T1, T2, ... gemessen werden, nach welchen jeweils eine festgelegte Anzahl N (N = 1, 2, ...) von neuen Bildzeilen 4 beschrieben wurde. Aufgrund dieser Messungen T0, T1, T2, ... können die Parameter, welche das Bewegungsverhalten des freilaufenden Druckkopfes 71 definieren (im einfachen Fall von Gleichung (1) sind dies GXO und $\delta$), laufend neu ermittelt bzw. angepasst werden. Mathematisch ausgedrückt: die Zeitmessungen T0, T1, T2, ... stellen Stützstellen dar, welche zum Ausgleichen (fitting) der Kurve GX(t) verwendet werden. Auch hier bietet das Verwenden mathematischer Modelle zur Beschreibung der Geschwindigkeit GX(t) des freilaufenden Druckkopfes entlang der Fast-scan-Richtung X den Vorteil, dass gestützt auf die effektiv gemessenen Zeitwerte T0, T1, ..., Ti die Taktrate für das Abrufen und Aufbringen der digitalen Daten bis zum nächsten Messwert T(i+1) quasi beliebig fein abgestuft extrapoliert werden kann.

Es können, analog zu Fig. 5(b), Messphasen 221 zwischen den Belichtungsphasen 222 liegen.

Alternativ zu einer laufenden Anpassung aufgrund aktueller Messwerte kann die Vorrichtung einmal für längere Zeit geeicht werden.

Zur Bestimmung des Bewegungsverhaltens des freilaufenden Druckkopfes 71 wird das Verhalten der Geschwindigkeit GX(t) als Funktion der Zeit t mit Hilfe des Sensorsystems 52, 53 ausgemessen. Die Messwerte können bspw. zur empirischen Bestimmung eines geeigneten mathematischen Modells verwendet und/oder in einer Tabelle abgelegt werden. Abhängig von der gewünschten Genauigkeitsanforderung für die Beschreibung des Verhaltens der Geschwindigkeit GX(t) kann eine Vielzahl von Messwerten zur Mittelwertbildung verwendet werden, so dass statistische Messfehler des Sensorsystems 52, 53 beliebig klein gehalten werden können.

Der Vorteil mathematischer Modelle zur Approximation des Verhaltens GX(t) besteht im Wesentlichen darin, dass unabhängig von der Auflösung und der Messgenauigkeit des Sensorsystems 52, 53 auch Zwischenwerte durch Interpolation exakt bestimmt und bspw. in einer Tabelle gespeichert werden können.

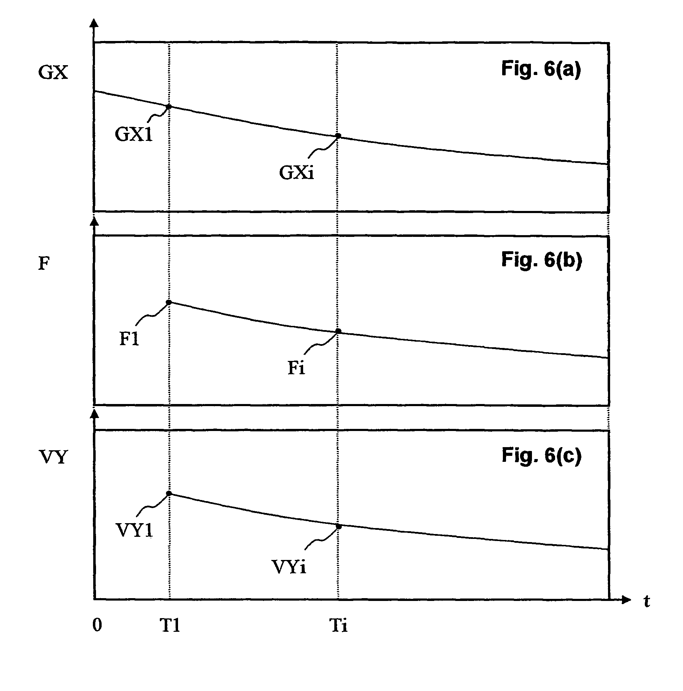

In Figur 6 wird eine Ausführungsform der Synchronisierung beim erfindungsgemäßen Verfahren mit Hilfe einer Darstellung (a) der Geschwindigkeit GXi des Druckkopfes 71 entlang der Fast-scan-Richtung X, (b) der Taktfrequenz Fi zum Abrufen 96 und Aufbringen 97 der digitalen Daten auf Bildmaterial 20 und (c) der Geschwindigkeit VYi des Druckkopfes 71 oder des Bildmaterials 20 entlang der Slow-scan-Richtung Y als Funktion der Zeit t erläutert.

Die Signale des Sensorsystems 52, 53 der Fast-scan-Richtung X werden bspw. in der Messphase 121 vor und/oder während dem eigentlichen Aufbringen der digitalen Daten auf das Bildmaterial 20 bei freilaufendem Druckkopf 71 durch die Steuereinheit 90 erfasst (vgl. Fig. 5(c)). Zu einem Zeitpunkt T1 > 0 wird die Belichtungsphase 122 und somit das Aufbringen der digitalen Daten auf das Bildmaterial 20 mit einer Taktfrequenz F1 gestartet. Aufgrund der erfassten und gespeicherten Geschwindigkeitsdaten des freilaufenden Druckkopfes 71 entlang der Fast-scan-Richtung X wird während des Aufbringens der Bilddaten die Geschwindigkeit GXi zu beliebigem Zeitpunkt Ti > T1 hochgenau interpoliert und/oder extrapoliert (Figur 6(a)). Basierend auf diesen Werten GXi generiert die Steuereinheit 90 eine kontinuierliche oder fein abgestufte Abfolge von Taktfrequenzen

$$Fi = F1 * GXi / GX1 \qquad\qquad (2)$$

für die Synchronisierung des Abrufs 96 der digitalen Daten, wie in Figur 6(b) angedeutet.

Alternativ kann bei geeigneter Ausgestaltung des Massenträgheitsmoments des Druckkopfes 71 entlang der Fast-scan-Richtung X und geeigneter Wahl der Periode 100 und der Freilaufphase 120 die Taktfrequenzen Fi während dem Aufbringen einer Bildzeile 4 oder eines Teilbildes auf das Bildmaterial 20 konstant gehalten werden, d.h. Fi = F1 für die Synchronisierung des Abrufs der digitalen Daten während einer Freilaufphase 120.

Die Verschiebungsgeschwindigkeit des Druckkopfes 71 entlang der Slow-scan-Richtung Y wird, bspw. in der Messphase 121, auf eine Sollgeschwindigkeit VY1 gebracht. Die Steuereinheit 90 liefert auch eine kontinuierliche oder fein abgestufte Abfolge von Geschwindigkeitssignalen

$$VYi = VY1*GXi/GX1 \qquad (3)$$

für den Antrieb des Druckkopfes 71 entlang der Slow-scan-Richtung Y während der Belichtungsphase 122; siehe Figur 6(c).

Alternativ kann bei geeigneter Ausgestaltung des Massenträgheitsmoments des Druckkopfes 71 entlang der Fast-scan-Richtung X und geeigneter Wahl der Periode 100 und der Freilaufphase 120 die Verschiebungsgeschwindigkeit VYi des Druckkopfes 71 entlang der Slow-scan-Richtung Y während dem Aufbringen einer Bildzeile 4 oder eines Teilbildes auf das Bildmaterial 20 konstant gehalten werden, d.h. VYi = VY1 für die Synchronisierung des Abrufs der digitalen Daten während einer Freilaufphase 120.

Nach dem Aufbringen der digitalen Daten einer Bildzeile 4 oder eines Teil- oder Gesamtbildes wird der Druckkopf 71 entlang der Fast-scan-Achse X wieder angetrieben und auf eine SollGeschwindigkeit GXO gebracht, um anschließend die digitalen Daten für die nächste Bildzeile 4 oder das nächste Teil- oder Gesamtbild aufzubringen.

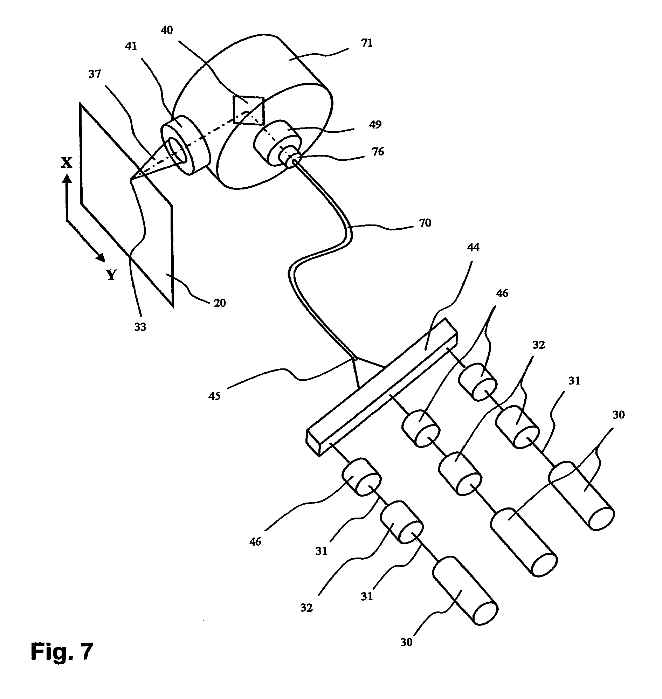

Figur 7 zeigt eine Ausführungsvariante einer erfindungsgemäßen Vorrichtung 1 am Beispiel eines Laserbelichters. Vorzugsweise eine bis drei Lasereinheiten 30 erzeugen einen bis drei Laserstrahlen 31 (z. B. RGB), welche direkt in den Lasereinheiten 30 oder über externe Modulationseinheiten 32 in ihren Leistungen variiert werden können, über geeignete Strahlführungs- und/oder Strahlformungsmittel 44 auf einen gemeinsamen Fokus 45 oder drei separate Fokus 45 gebracht werden und in einen gemeinsamen oder drei separate Single-mode-Lichtleiter 70 einkoppelbar sind. Der mindestens eine Single-mode-Lichtleiter 70 bildet eine flexible Zuführung des Laserlichtes in einen entlang der Fast-scan- und Slow-scan-Richtung X bzw. Y beweglich gelagerten Druckkopf 71. Das Licht aus dem mindestens einen Lichtleiter 70 wird im Druckkopf 71 über Umlenkmittel 40 und/oder Strahlformungsmittel 41, 49 in einen Fokus 33 auf das Bildmaterial 20 geführt. Vorzugsweise ein bis drei optische Elemente 46 zur Änderung der Polarisation der ein bis drei Laserstrahlen 31, beispielsweise Wellenplatten oder Depolarisatoren, werden zwischen Modulator 32 und Umlenkmittel 40 eingesetzt. Vorzugsweise wird das Ende des mindestens einen Lichtleiters 70 auf einer mikromechanischen Verschiebeeinheit 76, beispielsweise einer Piezostelleinheit, beweglich gelagert und ermöglicht bei geeigneter Dimensionierung den Fokus 33 des Laserstrahls 37 sehr präzise auf das zu belichtende Bildmaterial 20 einzustellen und beispielsweise unter Verwendung eines geeigneten Sensorsystems und Regelkreises automatisch nachzuführen.

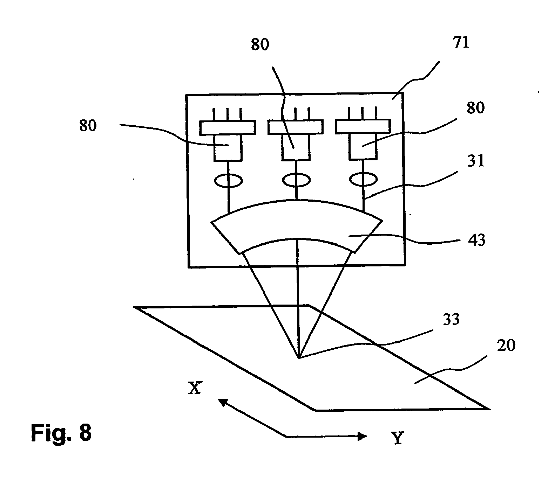

Figur 8 zeigt eine erfindungsgemäße Ausgestaltungsvariante des Druckkopfes 71 zur Durchführung des erfindungsgemäßen Verfahrens am Beispiel eines Laserbelichters. Vorzugsweise eine bis drei Laserdioden 80 sind in einem entlang zweier Achsen X und Y beweglichen Druckkopf 71 integriert und erzeugen einen bis drei Laserstrahlen 31, deren Leistung durch direkte Ansteuerung der Laserdioden 80 in ihrer Leistung modulierbar und über geeignete Strahlführungs- und/oder Strahlformungsmittel 43 auf einen Belichtungspunkt 33 auf Bildmaterial 20 fokussierbar sind.

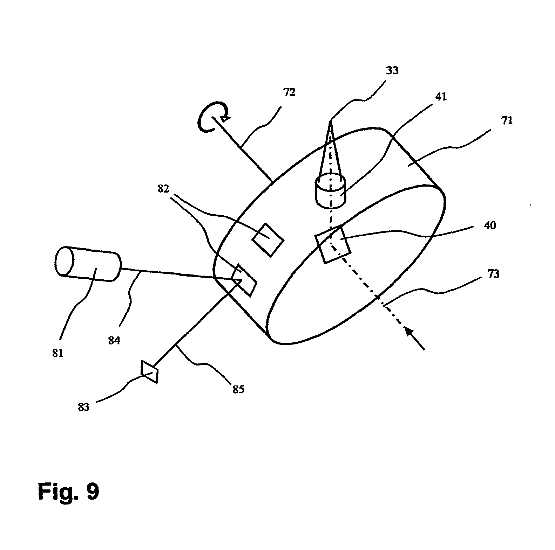

Figur 9 zeigt eine weitere erfindungsgemäße Ausgestaltungsvariante des Druckkopfes 71 zur Durchführung des erfindungsgemäßen Verfahrens. Ein Hilfs-Laser 81 und ein lichtempfindlicher Sensor 83 sind so angeordnet, dass der Laserstrahl 84 des Hilfs-Laser 81 vom mindestens einen auf dem beweglichen Druckkopf 71 angebrachten Hilfs-Spiegel 82 während der Bewegung des Druckkopfes 71 so reflektiert wird, dass der reflektierte Laserstrahl 85 den lichtempfindlichen Sensor 83 überstreift und dadurch ein Start- und/oder Positionssignal zur Synchronisierung des Abrufens 96 und Aufbringens 97 der Bilddaten auf Bildmaterial 20 erzeugt wird.

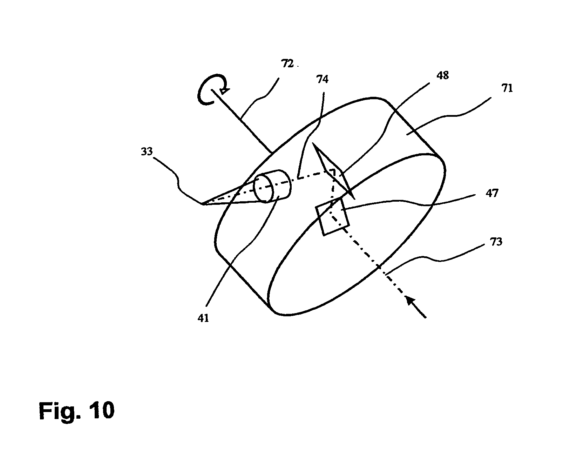

Figur 10 zeigt eine erfindungsgemäße Ausgestaltungsvariante der Umlenkmittel des Druckkopfes 71 zur Durchführung des erfindungsgemäßen Verfahrens am Beispiel eines Laserbelichters. Mindestens zwei Umlenkmittel 47, 48 sind so im Druckkopf 71 angebracht, dass der entlang der Drehachse 72 einfallende Laserstrahl 73 so umgelenkt wird, dass der abgelenkte Laserstrahl 74 nach Passieren der Umlenkmittel 47, 48 orthogonal zur Drehachse 72 bzw. zum Laserstrahl 73 verläuft.

**Bezugszeichenliste:**

| | |
|---|---|
| 1 | Vorrichtung |
| 4 | Bildzeile |
| 5 | Polygonspiegel |
| 6, 7 | Laserstrahl |
| 10 | Halbtrommel |
| 11 | Transporteinrichtung für Bildmaterial |
| 12 | Ansaugvorrichtung für Bildmaterial |
| 13 | Transportwalzen |

| | |
|---|---|
| 14 | Transportband |
| 20 | Bildmaterial |
| 30 | Laser |
| 31, 37 | Laserstrahl |
| 32 | Modulationseinheit |
| 33 | Fokus |
| 34 | kurze Strahlachse |
| 35 | lange Strahlachse |
| 40 | Umlenkmittel |
| 41, 49 | Strahlformungsmittel |
| 42 | Translationseinheit |
| 43 | Strahlformungs- und/oder Strahlumlenkmittel |
| 44 | Strahlführungs- und/oder Strahlformungsmittel |
| 45 | Fokus |
| 46 | optisches Element zur Änderung der Polarisation |
| 47, 48 | Strahlumlenkelemente |
| 50 | Sensorkopf |
| 51 | Maßstab |
| 52 | Gitterelement |
| 53 | Lichtdetektor |
| 54, 55 | Sensorsysteme |
| 56, 57 | Sensorsignale |
| 60 | Fast-scan-Antriebssystem |
| 61 | Slow-scan-Antriebssystem |
| 70 | Single-mode-Lichtleiter |
| 71 | Druckkopf |
| 72 | Drehachse |
| 73, 74 | Laserstrahl |
| 75 | Photodetektor |
| 76 | mikromechanische Verschiebeeinheit |
| 80 | Laserdiode |
| 81 | Hilfs-Laser |
| 82 | Hilfs-Spiegel |
| 83 | lichtempfindlicher Sensor |
| 84, 85 | Laserstrahl |
| 90 | Steuereinheit |
| 91 | Speicher |
| 92-94 | Synchronisierungssignale |
| 95 | Bilddatenspeicher |
| 96 | Abrufen der Bilddaten |
| 97 | Aufbringen der Bilddaten auf Bildmaterial |
| 100 | Periode |
| 110, 210 | Antriebsphase |
| 120, 220 | Freilaufphase |
| 121, 221 | Messphase |
| 122, 222 | Belichtungsphase |
| X | Fast-scan-Richtung |
| Y | Slow-scan-Richtung |
| GX | Geschwindigkeit entlang der Fast-scan-Richtung |
| VY | Geschwindigkeit entlang der Slow-scan-Richtung |
| F | Taktfrequenz |
| T, t | Zeit |

**Patentansprüche**

1. Verfahren zum Aufbringen digitaler Daten auf Bildmaterial (20) mittels eines Druckkopfes (71), wobei das Bildmaterial (20) und der Druckkopf (71) relativ zueinander entlang einer Fast-scan-Richtung (X) angetrieben und bewegt werden, das Bildmaterial (20) und der Druckkopf (71) relativ zueinander entlang einer Slow-scan-Richtung (Y) angetrieben und bewegt werden und digitale Bilddaten auf das Bildmaterial (20) aufgebracht werden (97), **dadurch gekennzeichnet, dass** während des Aufbringens (97) der Bilddaten das Bildmaterial (20) und der Druckkopf (71) sich relativ zueinander entlang der Fast-scan-Richtung (X) ohne Antrieb mittels Trägheit weiter bewegen, das antriebslose Bewegungsverhalten des Druckkopfes (71) relativ zum Bildmaterial (20) entlang der Fast-scan-Richtung (X) vor und/oder während des Aufbringens (97) der Bilddaten erfasst wird und daraus durch geeignete Interpolation und/ oder Extrapolation Synchronisierungssignale (92-94) und eine momentane Taktfrequenz (Fi) zum Abrufen (96) und Aufbringen (97) der Bilddaten abgeleitet werden.

2. Verfahren nach Anspruch 1, wobei das antriebslose Bewegungsverhalten anhand von diskreten Messwerten erfasst wird und aus diesen Messwerten Parameter (GXO, $\delta$) für die Interpolation und/oder Extrapolation von Synchronisierungssignalen (92-94) und einer momentanen Taktfrequenz (Fi) zum Abrufen (96) und Aufbringen (97) der Bilddaten berechnet werden.

3. Verfahren nach einem der vorangehenden Ansprüche, wobei aus dem erfassten Bewegungsverhalten des Druckkopfes (71) relativ zum Bildmaterial (20) entlang der Fast-scan-Richtung (X) eine momentane Geschwindigkeit (VYi) des Bildmaterials (20) und des Druckkopfes (71) relativ zueinander entlang der Slow-scan-Richtung (Y) abgeleitet werden.

4. Verfahren nach einem der vorangehenden Ansprüche, wobei vor dem Aufbringen der Bilddaten das Bildmaterial (20) und der Druckkopf (71) relativ zueinander entlang der Fast-scan-Richtung (X) auf eine Sollgeschwindigkeit (GXO) beschleunigt werden.

5. Verfahren nach einem der vorangehenden Ansprüche, wobei vor dem Aufbringen der Bilddaten das Bildmaterial (20) und der Druckkopf (71) relativ zueinander entlang der Slow-scan-Richtung (Y) auf eine Sollgeschwindigkeit (VYO) beschleunigt werden.

6. Verfahren nach Anspruch 4 oder 5, wobei ein in sich abgeschlossener, vollständiger Bilddatensatz auf das Bildmaterial (20) aufgebracht wird, während das Bildmaterial (20) und der Druckkopf (71) relativ zueinander entlang der Fast-scan-Richtung (X) ohne Antrieb mittels Trägheit relativ zueinander weiterbewegt werden.

7. Verfahren nach Anspruch 4 oder 5, wobei ein in sich abgeschlossener, vollständiger Bilddatensatz auf das Bildmaterial (20) aufgebracht wird, indem der Bilddatensatz in Teile, welche bspw. eine oder mehrere Bildzeilen (4) umfassen, zerlegt wird, die Bilddatensatzteile nacheinander auf das Bildmaterial (20) aufgebracht werden, während das Bildmaterial (20) und der Druckkopf (71) relativ zueinander entlang der Fast-scan-Richtung (X) ohne Antrieb mittels Trägheit relativ zueinander weiterbewegt werden, und zwischen jeweils zwei aufeinander folgenden Bilddatensatzteilen das Bildmaterial (20) und der Druckkopf (71) relativ zueinander entlang der Fast-scanRichtung (X) auf eine Sollgeschwindigkeit (GXO) beschleunigt werden.

8. Verfahren nach einem der vorangehenden Ansprüche, wobei zwischen dem Aufbringen (97) von zwei aufeinander folgenden Bildzeilen (4) das Bildmaterial (20) und der Druckkopf (71.) relativ zueinander entlang der Slow-scan-Richtung (X) auf eine Sollgeschwindigkeit (VYO) beschleunigt werden.

9. Verfahren nach einem der vorangehenden Ansprüche, wobei zwischen dem Aufbringen (97) von zwei aufeinander folgenden Bildzeilen (4) das Bildmaterial (20) und der Druckkopf (71) relativ zueinander entlang der Slow-scan-Richtung (X) um einen vorgegebenen Zeilenabstand bewegt werden.

10. Verfahren nach einem der vorangehenden Ansprüche, wobei das Bewegungsverhalten des Druckkopfes (71) mit einem Sensorsystem (54, 55) bestehend aus mindestens einer Lichtquelle (81) erfasst wird.

11. Verfahren nach einem der vorangehenden Ansprüche, wobei die Bilddaten mittels Licht (6) auf das Bildmaterial (20) aufgebracht werden.

12. Verfahren nach Anspruch 11, wobei das Licht (6) derart auf das Bildmaterial (20) fokussiert wird, dass der Durchmesser (34 bzw. 35) des Lichtflecks (33) auf dem Bildmaterial (20) in der Fast-scan-Richtung (X) kleiner ist als in der Slow-scan-Richtung (Y), so dass sich durch Verschmieren in der Fast-scan-Richtung (X) beim Aufbringen eines Bilddatenpunktes im Wesentlichen derselbe Durchmesser des Bilddatenpunktes in der Fast-scan-Richtung (X) und in der Slow-scan-Richtung (Y) ergibt.

**13.** Vorrichtung (1) zur Durchführung des Verfahrens nach einem der Ansprüche 1 bis 12, beinhaltend Haltemittel (10-14) zum Halten des Bildmaterials (20), einen Bilddatenspeicher (95) zur Speicherung der aufzubringenden Bilddaten, einen Druckkopf (71) zum Aufbringen (97) von aus dem Bilddatenspeicher (95) zugeführten Bilddaten auf das Bildmaterial (20), wobei das gehaltene Bildmaterial (20) und der Druckkopf (71) relativ zueinander entlang einer Fast-scan-Richtung (X) und entlang einer Slow-scan-Richtung (Y) beweglich sind, Fast-scan-Antriebsmittel (61) zum Antrieb des gehaltenen Bildmaterials (20) und des Druckkopfes (71) relativ zueinander entlang der Slow-scan-Richtung (Y), Fast-scan-Sensormittel (52, 53) zur Erfassung der gegenseitigen Lage des gehaltenen Bildmaterials (20) und des Druckkopfes (71) entlang der Fast-scan-Richtung (X) und Slow-scan-Sensormittel (50, 51) zur Erfassung der gegenseitigen Lage des gehaltenen Bildmaterials (20) und des Druckkopfes (71) entlang der Slow-scan-Richtung (Y), **dadurch gekennzeichnet, dass** die Fast-scan-Antriebsmittel (60) vom gehaltenen Bildmaterial (20) und/oder vom Druckkopf (71) abkoppelbar sind so dass während des Aufbringens der Bilddaten der Druckkopf (70) sich relativ zum Bildmaterial (20) entlang der Fast-scan-Richtung (X) ohne Antrieb mittels Trägheit bewegt, und eine mit den Fast-scan-Sensormitteln (52, 53), den Slow-scan-Sensormitteln (50, 51), den Fast-scan-Antriebsmitteln (60), den Slow-scan-Antriebsmitteln (61) und dem Bilddatenspeicher (95) verbundene Steuereinheit (90) zum Erfassen des Bewegungsverhaltens des Druckkopfes (71) relativ zum Bildmaterial (20) entlang der Fast-scan-Richtung (X) und zum Ableiten von Synchronisierungssignalen (92-94) und einer momentanen Taktfrequenz für das Abrufen (96) und Aufbringen (97) der Bilddaten durch geeignete Interpolation und/oder Extrapolation vorhanden ist.

**14.** Vorrichtung (1) nach Anspruch 13, wobei das Sensorsystem (54, 55) für die Erfassung der Bewegung des Druckkopfes (71) entlang der Fast-scan-Richtung X und/oder Slow-scan-Richtung Y mindestens eine Lichtquelle (81) beinhaltet.

**15.** Vorrichtung (1) nach Anspruch 13 oder 14, wobei die Steuereinheit (90) eine Speichereinheit (91) zum Speichern des erfassten Bewegungsverhaltens des Druckkopfes (71) relativ zum Bildmaterial (20) entlang der Fast-scan-Richtung (X) beinhaltet.

**16.** Vorrichtung (1) nach einem der Ansprüche 13-15, wobei die Haltemittel (10-14) als Trommel (10), an deren Innenseite das Bildmaterial (20) befestigbar ist, oder als zwischen mindestens zwei Transportwalzen (13) gespanntes Transportband (14), auf dem das Bildmaterial (20) befestigbar ist, ausgebildet sind.

**17.** Vorrichtung (1) nach einem der Ansprüche 13-16, wobei die Fast-scan-Sensormittel (52, 53) ein periodisches Gitterelement (52) oder einen periodischen Winkelgeber und einen Lichtdetektor (53) beinhalten.

**18.** Vorrichtung (1) nach einem der Ansprüche 13-17, wobei die Slow-scan-Sensormittel (50, 51) eine Teilung (51) und einen Sensorkopf (50) zum Ablesen derselben beinhalten.

**19.** Vorrichtung (1) nach einem der Ansprüche 13-18, wobei der Druckkopf (71) rotierbar gelagert ist.

**20.** Vorrichtung (1) nach einem der Ansprüche 13-19, wobei die Vorrichtung (1) ein Laserbelichter ist, welche mindestens eine Laserlichtquelle (30, 80) beinhaltet, deren Licht (31) aufgrund der im Bildspeicher (95) gespeicherten Daten in seiner Leistung modulierbar und zum Druckkopf (71) führbar ist.

**21.** Vorrichtung (1) nach Anspruch 19 oder 20, wobei die Vorrichtung (1) mindestens einen photoempfindlichen Sensor (75) beinhaltet, der zur Messung der Leistung des mindestens einen Laserstrahls (7, 37) verwendbar ist.

**22.** Vorrichtung (1) nach einem der Ansprüche 13-21, wobei die Vorrichtung (1) mindestens ein auf einer mikromechanischen Verschiebeeinheit (76) beweglich gelagertes optisches Element beinhaltet.

**23.** Vorrichtung (1) nach Anspruch 22, wobei die mikromechanische Verschiebeeinheit (76) mindestens ein piezoelektrisches Element beinhaltet.

**24.** Vorrichtung (1) nach einem der Ansprüche 13-23, wobei die Vorrichtung (1) mindestens ein optisches Element (46) beinhaltet, welches zur gezielten Veränderung des Polarisationszustandes des Laserstrahls (31) verwendbar ist.

**25.** Vorrichtung (1) nach Anspruch 24, wobei das mindestens eine optische Element (46) zur gezielten Veränderung des Polarisationszustandes des Laserstrahls (31) eine optische Wellenplatte oder einen optischen Depolarisator beinhaltet.

**26.** Vorrichtung (1) nach einem der Ansprüche 19-25, wobei der Druckkopf (71) rotierbare Strahlumlenkmittel (5, 40), bspw. einen Polygonspiegel (5), umfasst.

**27.** Vorrichtung (1) nach Anspruch 26, wobei die Umlenkmittel (40) mindestens zwei Strahlumlenkeinheiten (47, 48) beinhalten, welche den Laserstrahl (73) so umlenken, dass der umgelenkte Laserstrahl (74) orthogonal zur Drehachse (72) verläuft.

**28.** Vorrichtung (1) nach einem der Ansprüche 20-27, wobei die Vorrichtung (1) Strahlformungsmittel (41) zum Fokussieren des von der mindestens einen Laserlichtquelle (30, 80) emittierten Lichtes (31) auf das Bildmaterial (20) beinhaltet.

**29.** Vorrichtung (1) nach Anspruch 28, wobei die Strahlformungsmittel (41) teilweise oder vollständig auf dem beweglichen Druckkopf (71) angebracht sind.

**30.** Vorrichtung (1) nach einem der Ansprüche 20-29, wobei die Vorrichtung (1) mindestens einen Single-mode-Lichtleiter (70) zum Führen von Licht (31) von der mindestens einen Laserlichtquelle (30) zum Druckkopf (71) beinhaltet.

**31.** Vorrichtung (1) nach einem der Ansprüche 20-30, wobei die mindestens eine Laserlichtquelle (80) als mindestens eine Laserdiode ausgestaltet und vorzugsweise im Druckkopf (71) integrierbar ist.

**Claims**

**1.** Method for printing digital data on photographic material (20) by means of a printing head (71), wherein the photographic material (20) and the printing head (71) are actuated and moved relatively to each other along a fast-scan-direction (X), the photographic material (20) and the printing head (71) are actuated and moved relatively to each other along a slow-scan-direction (Y) and digital image data are printed (97) onto the photographic material (20), **characterized in that** during the printing (97) of the image data the photographic material (20) and the printing head (71) move further relatively to each other along a fast-scan-direction (X) without actuation by means of inertia, the non-actuated movement behaviour of the printing head (71) relatively to the photographic material (20) along the fast-scan-direction (X) before and/or during the printing (97) of the image data is detected and synchronisation signals (92-94) and a momentary clock frequency (Fi) are derived by a suitable interpolation and/or extrapolation in order to retrieve (96) and print (97) the image data.

**2.** Method according to claim 1, wherein the non-actuated movement behaviour is detected by means of discrete measurement values and parameters (GXO, $\delta$) are calculated from these measurement values for the interpolation and/or extrapolation of synchronisation signals (92-94) and a momentary clock frequency (Fi) in order to retrieve (96) and print (97) the image data.

**3.** Method according to one of the preceding claims, wherein a momentary speed (VYi) of the photographic material (20) and the printing head (71) relatively to each other along the slow-scan-direction (Y) are derived from the detected movement behaviour of the printing head (71) relatively to the photographic material (20) along the fast-scan-direction (X).

**4.** Method according to one of the preceding claims, wherein the photographic material (20) and the printing head (71) are accelerated to a desired speed (GXO) relatively to each other along the fast-scan-direction (X) before the printing of the image data.

**5.** Method according to one of the preceding claims, wherein the photographic material (20) and the printing head (71) are accelerated to a desired speed (VYO) relatively to each other along the slow-scan-direction (Y) before the printing of the image data.

**6.** Method according to claim 4 or 5, wherein a self-contained and complete image data set is printed onto the photographic material (20) while the photographic material (20) and the printing head (71) are moved further relatively to each other along the fast-scan-direction (X) without actuation by means of inertia.

**7.** Method according to claim 4 or 5, wherein a self-contained and complete image data set is printed onto the photographic material (20) by breaking down the image data set in parts which comprise e.g. one or more image lines (4), the image data set parts are subsequently printed onto the photographic material (20) while the photographic material (20) and the printing head (71) are moved further relatively to each other along the fast-scan-direction (X) without actuation by means of inertia, and between two subsequent image data set parts the photographic material (20) and the printing head (71) are accelerated to a desired speed (GXO) relatively to each other along the fast-scan-direction (X).

8.  Method according to one of the preceding claims, wherein between printing (97) two subsequent image lines (4) the photographic material (20) and the printing head (71) are accelerated to a desired speed (VYO) relatively to each other along the slow-scan-direction (X).

9.  Method according to one of the preceding claims, wherein between printing (97) two subsequent image lines (4) the photographic material (20) and the printing head (71) are moved relatively to each other along the slow-scan-direction (X) by a predetermined line spacing.

10. Method according to one of the preceding claims, wherein the movement behaviour of the printing head (71) is detected by a sensor system (54, 55) consisting of at least a light source (81).

11. Method according to one of the preceding claims, wherein the image data are printed onto the photographic material (20) by means of light (6).

12. Method according to claim 11, wherein the light (6) is focused on the photographic material (20) in such a way that the diameter (34 or 35 respectively) of the light spot (33) on the photographic material (20) is smaller in the fast-scan-direction (X) than in the slow-scan-direction (Y), such that substantially the same diameter of the image data spot in the fast-scan-direction (X) and the slow-scan-direction (Y) results by a smearing in the fast-scan-direction (X) during the printing of an image data point.

13. Device (1) for carrying out the method according to one of the claims 1 to 12, comprising supporting means (10-14) for supporting the photographic material (20), an image data memory (95) for recording the image data to be printed, a printing head (71) for printing (97) image data provided from the image data memory (95) onto the photographic material (20), wherein the supported photographic material (20) and the printing head (71) are movable relatively to each other along a fast-scan-direction (X) and along a slow-scan-direction (Y), fast-scan actuation means (61) for actuating the supported photographic material (20) and the printing head (71) relatively to each other along the slow-scan-direction (Y), fast-scan sensor means (52, 53) for detecting the mutual location of the supported photographic material (20) and the printing head (71) along the fast-scan-direction (X) and slow-scan sensor means (50, 51) for detecting the mutual location of the supported photographic material (20) and the printing head (71) along the slow-scan-direction (Y), **characterized in that** the fast-scan actuation means (60) are detachable from the supported photographic material (20) and/or the printing head (71), such that during the printing of the image data the printing head (71) moves relatively to the photographic material (20) along the fast-scan-direction (X) without an actuation by means of inertia, and a controller unit (90) is provided for detecting the movement behaviour of the printing head (71) relatively to the photographic material (20) along the fast-scan-direction (X) and for deriving synchronisation signals (92-94) and a momentary cycle frequency for the retrieving (96) and the printing (97) of the image data by a suitable interpolation and/or extrapolation, being connected to the fast-scan sensor means (52, 53), the slow-scan sensor means (50, 51), the fast-scan actuation means (60), the slow-scan actuation means (61) and the image data memory (95).

14. Device (1) according to claim 13, wherein the sensor system (54, 55) comprises at least a light source (81) for the detection of the movement of the printing head (71) along the fast-scan-direction (X) and/or the slow-scan-direction (Y).

15. Device (1) according to claim 13 or 14, wherein the controller unit (90) comprises a memory unit (91) for recording the detected movement behaviour of the printing head (71) relatively to the photographic material (20) along the fast-scan-direction (X).

16. Device (1) according to one of the claims 13 to 15, wherein the supporting means (10-14) are formed as a drum (10), on the inner side of which the photographic material (20) is attachable, or as a transport band (14) tensioned between at least two transport rolls (13), on which the photographic material (20) is attachable.

17. Device (1) according to one of the claims 13 to 16, wherein the fast-scan sensor means (52, 53) comprise a periodic mesh element (52) or a periodic angular sensor and a light detector (53).

18. Device (1) according to one of the claims 13 to 17, wherein the slow-scan sensor means (50, 51) comprise a scale (51) and a sensor head (50) for reading out the scale.

19. Device (1) according to one of the claims 13-18, wherein the printing head (71) is supported in a rotatable way.

20. Device (1) according to one of the claims 13 to 19, wherein the device (1) is a laser exposer which comprises at least a laser light source (30, 80), the light (31) of which is modulated with respect to its power because of the image data recorded in the image memory (95) and is guided to the printing head (71).

21. Device (1) according to claim 19 or 20, wherein the device (1) comprises at least a photo-sensitive sensor (75) used for measuring the power of the at least one laser beam (7, 37).

22. Device (1) according to one of the claims 13 to 21, wherein the device (1) comprises at least an optical element supported in a movable way on a micro-mechanic slide unit (76).

23. Device (1) according to claim 22, wherein the micro-mechanic slide unit (76) comprises at least one piezoelectric element.

24. Device (1) according to one of the claims 13 to 23, wherein the device (1) comprises at least an optical element (46) used for the targeted change of the polarisation state of the laser beam (31).

25. Device (1) according to claim 24, wherein the at least one optical element (46) comprises an optical wave plate or an optical depolarizer for the targeted change of the polarisation state of the laser beam (31).

26. Device (1) according to one of the claims 19 to 25, wherein the printing head (71) comprises rotatable beam deflecting means (5, 40), e.g. a polygon mirror (5).

27. Device (1) according to claim 26, wherein the deflecting means (40) comprise at least two beam deflecting units (47, 48) which deflect the laser beam (73) in such a way that the deflected laser beam (74) runs orthogonally with respect to the rotation axis (72).

28. Device (1) according to one of the claims 20 to 27, wherein the device (1) comprises beam forming means (41) for focusing the light emitted onto the photographic material (20) by the at least one laser light source (30, 80).

29. Device (1) according to claim 28, wherein the beam forming means (41) are partially or entirely attached on the movable printing head (71).

30. Device (1) according to one of the claims 20 to 29, wherein the device (1) comprises at least a single-mode light conductor (70) for guiding light (31) from the at least one laser light source (30) to the printing head (71).

31. Device (1) according to one of the claims 20 to 30, wherein the at least one laser light source (80) is formed as at least one laser diode and is preferably integrated in the printing head (71).

## Revendications

1. Méthode pour imprimer des données numériques sur un matériau photographique (20) par une tête d'impression (71), le matériau photographique (20) et la tête d'impression (71) étant actionnées et déplacées l'une par rapport à l'autre le long d'une direction fast-scan (X), le matériau photographique (20) et la tête d'impression (71) étant actionnées et déplacées l'une par rapport à l'autre le long d'une direction slow-scan (Y) et des données numériques d'image étant imprimées (97) sur le matériau photographique (20), **caractérisée en ce que** pendant l'impression (97) des données d'image le matériau photographique (20) et la tête d'impression (71) progressent plus loin l'une par rapport à l'autre le long d'une direction fast-scan (X) sans actionnement par l'inertie, le comportement du mouvement non-actionné de la tête d'impression (71) par rapport au matériau photographique (20) le long de la direction fast-scan (X) avant et/ou pendant l'impression (97) des données d'image est détecté et des signaux de synchronisation (92-94) et une fréquence d'horloge momentanée (Fi) est obtenue à l'aide d'une interpolation et/ou une extrapolation appropriée afin de rechercher (96) et imprimer (97) les données d'image.

2. Méthode selon la revendication 1, le comportement du mouvement non-actionné étant détecté à l'aide des valeurs de mesure discrètes et des paramètres (GXO, δ) sont calculés à partir de ces valeurs de mesure pour l'interpolation et/ou extrapolation des signaux de synchronisation (92-94) et d'une fréquence d'horloge momentanée (Fi) afin de rechercher (96) et imprimer (97) les données d'image.

3. Méthode selon l'une des revendications précédentes, une vitesse momentanée (Vyi) du matériau photographique (20) et de la tête d'impression (71) l'une par rapport à l'autre le long de la direction slow-scan (Y) étant obtenue à partir du comportement du mouvement détecté de la tête d'impression (71) par rapport au matériau photographique (20) le long de la direction fast-scan (X).

4. Méthode selon l'une des revendications précédentes, le matériau photographique (20) et la tête d'impression (71) étant accélérées jusqu'à une vitesse souhaitée (GXO) l'une par rapport à l'autre le long de la direction fast-scan (X) avant l'impression des données d'image.

5. Méthode selon l'une des revendications précédentes, le matériau photographique (20) et la tête d'impression (71) étant accélérées jusqu'à une vitesse souhaitée (VYO) l'une par rapport à l'autre le long de la direction slow-scan (Y) avant l'impression des données d'image.

6. Méthode selon l'une des revendications 4 ou 5, un set de données d'image autonome et complet étant imprimé sur le matériau photographique (20) pendant que le matériau photographique (20) et la tête d'impression (71) sont déplacées plus loin l'une par rapport à l'autre le long de la direction fast-scan (X) sans actionnement à l'aide de l'inertie.

7. Méthode selon l'une des revendications 4 ou 5, un set de données d'image autonome et complet étant imprimé sur le matériau photographique (20) par une division du set des données d'image dans des parties comprenant par exemple une ou plusieurs lignes d'image (4), par une impression ultérieure des parties du set de données d'image sur le matériau photographique (20) pendant que le matériau photographique (20) et la tête d'impression (71) soient déplacées plus loin l'une par rapport à l'autre le long de la direction fast-scan (X) sans actionnement à l'aide de l'inertie, et entre deux parties du set de données d'image consécutives le matériau photographique (20) et la tête d'impression (71) sont accélérées jusqu'à une vitesse souhaitée (GXO) l'une par rapport à l'autre le long de la direction fast-scan (X).

8. Méthode selon l'une des revendications précédentes, entre l'impression de deux lignes d'image consécutives (4) le matériau photographique (20) et la tête d'impression (71) étant accélérées jusqu'à une vitesse souhaitée (VYO) l'une par rapport à l'autre le long de la direction slow-scan (Y).

9. Méthode selon l'une des revendications précédentes, entre l'impression de deux lignes d'image consécutives (4) le matériau photographique (20) et la tête d'impression (71) étant accélérées jusqu'à une vitesse souhaitée (VYO) l'une par rapport à l'autre le long de la direction slow-scan (Y) par un espacement des lignes prédéterminé.

10. Méthode selon l'une des revendications précédentes, le comportement du mouvement de la tête d'impression (71) étant détecté par un système de capteurs (54, 55) consistant en au moins une source de lumière (81).

11. Méthode selon l'une des revendications précédentes, les données d'image étant imprimées sur le matériau photographique (20) à l'aide d'une lumière (6).

12. Méthode selon la revendication 11, la lumière (6) étant focalisée sur le matériau photographique (20) d'une telle manière que le diamètre (34 ou bien 35) du point de lumière (33) sur le matériau photographique (20) soit plus petit dans la direction fast-scan (X) que dans la direction slow-scan (Y), de sorte qu'essentiellement le même diamètre du point de données d'image dans la direction fast-scan (X) et la direction slow-scan (Y) résulte à cause d'un barbouillage dans la direction fast-scan (X) pendant l'impression d'un point de données d'image.

13. Dispositif (1) pour la mise en oeuvre de la méthode selon l'une des revendications 1 à 12, comprenant des moyens de support (10-14) pour supporter le matériau photographique (20), une mémoire de données d'image (95) pour enregistrer les données d'image à imprimer, une tête d'impression (71) pour imprimer (97) des données d'image de la mémoire de données d'image (95) sur le matériau photographique (20), le matériau photographique (20) supporté et la tête d'impression (71) étant déplaçables l'une par rapport à l'autre le long d'une direction fast-scan (X) et le long d'une direction slow-scan (Y), des moyens d'actionnement fast-scan (61) pour actionner le matériau photographique (20) supporté et la tête d'impression (71) l'une par rapport à l'autre le long de la direction slow-scan (Y), des moyens capteur fast-scan (52, 53) pour détecter la position mutuelle du matériau photographique supporté (20) et la tête d'impression (71) le long de la direction fast-scan (X) et des moyens capteur slow-scan (50, 51) pour détecter la position mutuelle du matériau photographique supporté (20) et la tête d'impression (71) le long de la direction slow-scan (Y), **caractérisé en ce que** les moyens d'actionnement fast-scan (61) sont détachables du matériau photographique (20) supporté et/ou la tête d'impression (71), de sorte que pendant l'impression des données d'image la tête d'impression (71) se déplace par rapport au matériau photographique (20) le long de la direction fast-scan (X) sans actionnement par l'inertie, et une unité de commande (90) est prévue pour détecter le comportement du mouvement de la tête d'impression (71) par rapport au matériau photographique (20) le long de la direction fast-scan (X) et pour obtenir des signaux de synchronisation (92-94) et une fréquence d'horloge momentanée pour obtenir (96) et imprimer (97) les données d'image par une interpolation et/ou extrapolation appropriée, connectée aux moyens capteur fast-scan (52, 53), aux moyens capteur slow-scan (50, 51), aux moyens d'actionnement fast-scan (60), aux moyens d'actionnement slow-scan (61) et à la mémoire de données d'image (95).

14. Dispositif (1) selon la revendication 13, le système de capteurs (54, 55) comprenant au moins une source de lumière (81) pour la détection du mouvement de la tête d'impression (71) le long de la direction fast-scan (X) et/ou la direction slow-scan (Y).

15. Dispositif (1) selon la revendication 13 ou 14, l'unité de commande (90) comprenant une unité de mémoire (91) pour enregistrer le comportement du mouvement de la tête d'impression (71) par rapport au matériau photographique (20) le long de la direction fast-scan (X).

16. Dispositif (1) selon l'une des revendications 13 à 15, les moyens de support (10-14) ayant la forme d'un tambour (10), du côté intérieur duquel le matériau photographique (20) est attachable, ou ayant la forme d'une bande de transport (14) tendue entre au moins deux rouleaux de transport (13), sur laquelle le matériau photographique (20) est attachable.

17. Dispositif (1) selon l'une des revendications 13 à 16, les moyens capteur fast-scan (52, 53) comprenant une maille périodique (52) ou un capteur angulaire périodique et un détecteur de lumière (53).

18. Dispositif (1) selon l'une des revendications 13 à 17, les moyens capteur slow-scan (50, 51) comprenant une échelle (51) et une tête capteur (50) pour lire l'échelle.

19. Dispositif (1) selon l'une des revendications 13 à 18, la tête d'impression (71) étant supportée de manière rotative.

20. Dispositif (1) selon l'une des revendications 13 à 19, le dispositif (1) étant un exposeur laser comprenant au moins une source laser de lumière (30, 80), la lumière (31) duquel est modulée par rapport à sa puissance à cause des données d'image enregistrées dans la mémoire d'images (95) et est guidée à la tête d'impression (71).

21. Dispositif (1) selon la revendication 19 ou 20, le dispositif (1) comprenant au moins un capteur photo-sensitive (75) utilisé pour mesurer la puissance d'au moins un faisceau laser (7, 37).

22. Dispositif (1) selon l'une des revendications 13 à 21, le dispositif (1) comprenant au moins un élément optique supporté de manière amovible sur une unité de glisse micro-mécanique (76).

23. Dispositif (1) selon la revendication 22, l'unité de glisse micro-mécanique (76) comprenant au moins un élément piézo-électrique.

24. Dispositif (1) selon l'une des revendications 13 à 23, le dispositif (1) comprenant au moins un élément optique (46) utilisé pour le changement ciblé de l'état de polarisation du faisceau laser (31).

25. Dispositif (1) selon la revendication 24, l'au moins un élément optique (46) comprenant une lame à retard optique ou un dépolariseur optique pour le changement ciblé de l'état de polarisation du faisceau laser (31).

26. Dispositif (1) selon l'une des revendications 19 à 25, la tête d'impression (71) comprenant des moyens de déviation de faisceau rotatives (5, 40), par exemple un miroir polygone (5).

**27.** Dispositif (1) selon la revendication 26, les moyens de déviation (40) comprenant au moins deux unités de déviation de faisceau (47, 48) qui dévient le faisceau laser (73) de sorte que le faisceau laser dévié (74) passe de manière orthogonale par rapport à l'axe de rotation (72).

**28.** Dispositif (1) selon l'une des revendications 20 à 27, le dispositif (1) comprenant des moyens de formation de faisceau (41) pour focaliser la lumière émise sur le matériau photographique (20) par au moins une source laser de lumière (30, 80).

**29.** Dispositif (1) selon la revendication 28, les moyens de formation de faisceau (41) étant partiellement ou entièrement attachés sur la tête d'impression amovible (71).

**30.** Dispositif (1) selon l'une des revendications 20 à 29, le dispositif (1) comprenant au moins un conducteur de lumière monomode (70) pour guider de la lumière (31) d'au moins une source laser de lumière (30) à la tête d'impression (71).

**31.** Dispositif (1) selon l'une des revendications 20 à 30, l'au moins une source laser de lumière (80) étant formée comme au moins une diode laser et étant préférablement intégrée dans la tête d'impression (71).

**Fig. 1**

**Fig. 2**

71

31

43

35

34

20

33

X

Y

**Fig. 3**

**Fig. 4**

Fig. 5(a)

Fig. 5(b)

Fig. 5(c)

EP 1 810 497 B1

Fig. 6(a)

Fig. 6(b)

Fig. 6(c)

24

**Fig. 7**

**Fig. 8**

**Fig. 9**

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0213511 A
- US 5315322 A
- US 6175666 B
- JP 2001213007 B
- JP 2001228619 B
- JP 2001245485 B
- JP 61019278 B
- US 5576852 A
- EP 0565335 A1
- DE 19743943 A1